# EUROPEAN PATENT SPECIFICATION

(11) **EP 4 038 683 B1**
(45) Date of publication and mention of the grant of the patent: **31.07.2024**
(21) Application number: 20870748.9
(22) Date of filing: 25.09.2020
(51) Int. Cl.: H01M 10/02, B82Y 30/00, B82Y 99/00, H01M 4/131, H01M 4/136, H01M 4/525, H01M 4/58, H01M 4/587, H01M 4/62, H01M 10/0525, H01M 4/505, H01M 4/02, H01M 10/0568

(54) **HIGH PURITY SWCNT ADDITIVE FOR PERFORMANCE ENHANCEMENT IN LITHIUM ION BATTERY**
HOCHREINES SWCNT-ADDITIV ZUR LEISTUNGSVERBESSERUNG IN LITHIUM-IONEN-BATTERIEN
ADDITIF DE SWCNT DE HAUTE PURETÉ POUR AMÉLIORATION DES PERFORMANCES DANS UNE BATTERIE AU LITHIUM-ION

(30) Priority: 04.10.2019 US 201962911022 P
(43) Date of publication of application: 10.08.2022
(73) Proprietor: Yazaki Corporation, Minato-ku Tokyo 108-8333 (JP)
(72) Inventor: BRAHIM, Sean Imtiaz, Camarillo, California 93012 (US); MAAT, Stefan, Camarillo, California 93012 (US)
(74) Representative: Schüssler, Andrea
(86) International application number: PCT/US2020/052678
(87) International publication number: WO 2021/067127

(56) References cited:
- CN-A- 106 602 069
- CN-A- 108 428 897
- KR-A- 20190 093 174
- US-A1- 2002 136 959
- US-A1- 2003 099 883
- US-A1- 2014 106 257
- US-A1- 2016 372 802

## Description

### TECHNICAL FIELD

This invention relates to a lithium ion battery cell having a cathode comprising an active material and 1-5% by weight of single wall carbon nanotubes (SWCNT) as a conductive additive, wherein the active material is a Li metal oxide or Li iron phosphate, and the SWCNT has an inorganic impurity content of less than 5% by weight, for significantly improved performance characteristics of the fully assembled cell, compared to lithium ion battery cells using only a conventional conductive carbon additive such as carbon black in the cathode.

### BACKGROUND

Li-ion batteries (LiBs) are commonly used in consumer electronics, and are attractive for use in hybrid gas-electric and all-electric vehicles. However, improvements in battery performance are needed for widespread vehicle application. Specifically, increased energy density, power density, lighter weight, and better reliability are desirable. Particularly attractive are thinner and/or lighter electrode materials having lower electrical resistance, more efficient ion transfer capability, and sufficient mechanical strength for battery use.

There is an increasing demand for development of battery chemistries that offer improved performance metrics over those that are presently achieved with LiB technologies. The US DOE has set such performance targets for LiB cells - capacity of 350 Wh/kg (750 Wh/L), continuous operation for at least 1,000 cycles, and a lifetime expectancy of 10+ years. At the battery module and pack level, the targets are equally lofty; fast charge in 15 - 30 mins (80% state of charge), with battery pack cost reduction to $125 - $80 per kWh. To achieve these quite ambitious goals, new battery chemistries will be critical, particularly for the cathode formulation of such energy storage devices. The conventional LiB makeup consists of cathodes with Li metal oxides as active material (e.g. Li-NiMnCo-Oxide (NMC), Li-NiCoAl-Oxide (NCA), Li-Fe-Phosphate (LFP), Li-Cobalt-Oxide (LCO), Li-Manganese-Oxide (LMO)). These oxides are particulate in morphology and require the inclusion of a polymeric binder such as polyvinylidene difluoride (PVDF) to form a cohesive electrode coating on a current collector. PVDF binder is insulating. Moreover, the Li metal oxides are resistive. A conductive additive such as carbon black is therefore included in the cathode formulation to lower the overall electrode resistance. All of these components are mixed with an appropriate solvent such as N-methyl-2-pyrrolidone (NMP), isopropanol (IPA), or water, and processed into a slurry for coating application. While inclusion of binder and conductive additive are necessary, these components do not contribute to the capacity of the LiB cell. In fact, the common practice is to incorporate these inactive additives at the lowest practical levels so that the concentration of active material is then maximized. The outcome of such tailored cathode formulations is an increased energy density.

Carbon nanotubes (CNT) are one-dimensional cylindrical graphitic nanostructures composed predominantly of sp² hybridized carbon atoms. CNT are classified according to the number of cylindrical graphitic sheets or "walls" that compose their individual nanotube structure. Nanotubes possessing one wall are referred to as single-wall carbon nanotubes (SWCNT), to differentiate them from their counterparts possessing two or more walls, called multi-wall carbon nanotubes (MWCNT). MWCNT with two walls are also called double-wall carbon nanotubes (DWCNT). Both types of CNT, SWCNT and MWCNT, possess nanometer-size diameters and micron-size lengths, offering high surface to volume ratio and giving rise to a high aspect ratio characteristic. Since the typical diameter of an individual SWCNT is 5 - 50 times smaller than the diameter of an individual MWCNT, SWCNT have significantly higher aspect ratio than MWCNT.

There is a need for new materials that can function as beneficial additives to the cathodes of LiB cells to boost performance metrics such as higher capacity, lower cell resistance, higher charging and discharging rate capabilities, and retention of greater capacity with cycling, to enable the next generation of advanced Li ion batteries.

CN108428897A discloses a positive electrode material for a lithium ion battery, comprising: 95-99 wt% of a positive electrode active material, 0.5-2 wt% of a positive electrode binder, and 0.5-3 wt% of a positive electrode conductive agent, wherein the positive electrode conductive agent comprises single-walled carbon nanotubes and conductive carbon black, and the mass ratio of single-walled carbon nanotubes to conductive carbon black is 1 : (1-40), preferably 1: (3-20).

CN106602069A discloses a slurry for the production of an anode material for lithium-ion batteries comprising a positive active material, a conductive agent, a binder and a solvent. The mass ratio of the positive active material, the conductive agent, the binder and the solvent is 100:(0-0.6):1.2:(0-40). The conductive agent is a mixture of SWCNTs and acetylene black or SWCNTs and carbon black. The active material is LiCoO2 or LiCoxNiyMn1-x-yO2. In the positive electrode material of the lithium-ion battery, the mass content of the positive active material exceeds 98.2%.

KR20190093174A discloses a negative electrode slurry comprising having a solid content of 52 weight %. The weight ratio of the negative electrode active material (artificial graphite: SiO = 87.39: 9.71 weight ratio), the conductive material (carbon black: single wall carbon nanotube = 1.33: 0.07 weight ratio), the thickener, and the binder in the negative electrode slurry was 97.1: 1.4: 0.7: 0.8.

### BRIEF DESCRIPTION OF THE DRAWINGS

Figure 1 shows images of slot-die roll-to-roll coatings of LiB cathode material containing SWCNT as conductive additive, on Al foil; (A) Coating for LiB energy cell, (B) Coating for LiB power cell.
Figure 2 is a set of two charts illustrating performance gains in type 18650 LiB energy cells containing purified SWCNT as conductive additive compared to LiB cells with conventional carbon black conductive additive (Super-P^{®} or "SP", Imerys Graphite & Carbon, Terrebonne, Quebec, Canada).
Figure 3 is a chart comparing the life cycle capacity of type 18650 LiB energy cells containing 6 wt % standard carbon black (SP) conductive additive (labeled Control), 1 wt % purified SWCNT + 1 wt % carbon black (SP), and 2 wt % purified SWCNT.
Figure 4 is a set of two charts showing charge and discharge capacity performance gains achieved in LiB power cells upon use of purified SWCNT as conductive additive at different concentrations, compared to conventional carbon black additive (standard cell at 6 wt % SP).
Figure 5 is a chart showing the difference in discharge capacity performance gains achieved in LiB power cells upon use of as-received SWCNT (CNT) or purified SWCNT as a conductive additive, compared to conventional carbon black (SP) additive.
Figure 6 is a chart showing reduction in cell impedance achieved in LiB power cells upon use of purified SWCNT as conductive additive at different concentrations compared to conventional carbon black additive (standard cell at 6 wt % SP).
Figure 7 is a set of two charts showing improved discharge rate performance at increasing discharge currents of **(B)** LiB power cells containing purified SWCNT as conductive additive compared to **(A)** conventional carbon black additive (6 wt % SP).
Figure 8 is a chart showing improved discharge rate performance at 20A discharge current of LiB power cells containing purified SWCNT as conductive additive at 2 wt % and 3 wt %, compared to cells containing carbon black additive (standard cell at 6 wt % SP).
Figure 9 is a chart showing a comparison of discharge rate performance at 20A discharge current of LiB power cells containing purified SWCNT as conductive additive at 2 wt % vs. as-received SWCNT additive also at 2 wt %.
Figure 10 is a chart showing improved life cycle performance (normalized discharge capacity) of representative LiB power cells containing purified SWCNT as conductive additive at 2 wt %, compared with cells containing carbon black additive (standard cell at 6 wt %).
Figure 11 is a chart showing superior early life cycle performance (normalized discharge capacity) of LiB power cells containing 2 wt % purified SWCNT + 2 wt % carbon black (SP) as conductive additive compared to cells containing 2 wt % as-received SWCNT + 2 wt % carbon black (SP) as conductive additive
Figure 12 is a set of charts showing improved performance of LiB parameters of charge capacity (top), discharge capacity (middle) and cell impedance (bottom) upon inclusion of SWCNT as conductive additive to either reduce or completely replace the carbon black content. 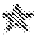 indicates the best performance in each category of energy cells or power cells.
Figure 13 is a chart showing superior early life cycle performance (normalized discharge capacity) of LiB power cells containing highly purified SWCNT as conductive additive at 2 wt %, compared to cells containing purified SWCNT or as-received SWCNT as conductive additive at 2 wt %, each with 2 wt % carbon black (SP).
Figure 14 is a chart showing a comparison of discharge rate performance at 20A discharge current of LiB power cells containing various grades of SWCNT as conductive additive at 2 wt %: as-received, purified, and highly purified SWCNT (each with 2 wt % SP).
Figure 15 is a chart showing life cycle performance (normalized discharge capacity) of LiB power cells containing as-received MWCNT vs. cells containing as-received, purified, or highly purified SWCNT as conductive additive at 2 wt % (each with 2 wt% SP), or containing no CNT (6 wt% SP).
Figure 16 is a chart showing a comparison of discharge rate performance at 20A discharge current of LiB power cells containing MWCNT vs. cells containing various grades of SWCNT as conductive additive at 2 wt % (each with 2 wt % SP), or containing no CNT (6 wt% SP).

### DETAILED DESCRIPTION OF THE INVENTION

The inventors have discovered that the use of high purity and well-dispersed conductive carbon nanotubes, in particular single wall carbon nanotubes (SWCNT), as a conductive additive material to cathode formulations of Li ion batteries enhances the performance characteristics of the fully assembled LiB cell. The high aspect ratio of the carbon nanotubes, in contrast to conventional carbon black particles, provides good contact between active metal oxides and allows conductive percolation at lower incorporated levels. The control of cathode morphology and porosity is essential. Lower porosity results in lower surface area and thus higher diffusion coefficient which decreases response time (Chang Kyoo Park et al, Bull. Korean Chem. Soc. 2011, Vol. 32, No. 3, p. 836-840). The inventors discovered that to achieve the desired performance enhancement, the SWCNT need to be of high purity with < 5 wt % inorganic impurities, possess a BET specific surface area of between 400 and about 1300 m²/g, preferably between 800 and about 1300 m²/g, and they need to be highly graphitized with minimal tube defects (as evidenced by Raman G/D ratio > 20, as measured using a laser having a wavelength of 532 nm). The incorporation of conductive SWCNT with these specific criteria to cathode formulations of LiB cells provides the necessary performance gains of increased capacity, increased rate capability, increased cycle lifetime, and reduced impedance to enable next generation battery systems that meet the set target criteria.

The inventors have discovered that use of SWCNT, rather than MWCNT, as a conductive additive material to cathode formulations of Li ion batteries enhances the performance characteristics of the fully assembled LiB cell. The advantages of using SWCNT over MWCNT as a conductive additive material in cathode formulations of LiB are due to higher aspect ratio and higher surface area afforded by SWCNT. SWCNT typically have 5-50 times higher aspect ratio than MWCNT. SWCNT typically have several hundred to more than a thousand m²/g more surface area than MWCNT. This combination of higher aspect ratio and higher surface area provided by SWCNT make these nanotubes more attractive than MWCNT for use in the present invention as conductive carbon additive.

LiB cells typically comprise a carbon-based anode, a cathode, and an electrolyte comprising a lithium salt in an organic solvent.

The present invention is directed to a LiB cell having a cathode comprising an active material and about 1-5% by weight (wt %) of single wall carbon nanotubes (SWCNT) as a conductive additive, wherein the SWCNT have an inorganic impurity content of less than 5 wt %, or less than 4.5 wt %.

As used in this application, "about" refers to ± 10% of the recited value.

Unless specified otherwise, % in this application refers to % by weight (wt).

The active material of the cathode of the LiB of the present invention typically contains a material selected from the group consisting of: Li-NiMnCo-Oxide (NMC), Li-NiCoAl-Oxide (NCA), Li-Fe-Phosphate (LFP), Li-Cobalt-Oxide (LCO), Li-Manganese-Oxide (LMO), and any combination thereof. The LiB cathode of the present invention typically contains 91-99 wt % of active materials, preferably 92-98 or 92-97 wt %.

The cathode of LiB of the present invention may contain a polymeric binder. For example, polyvinylidene difluoride (PVDF), can be used as a binder in the cathode. The binder may be in an amount of 0.5-8 wt %, preferably 1-6 wt %, or more preferably 1 - 2 wt % in the LiB cathode.

In one embodiment, the LiB cathode comprises a polymeric binder.

In one embodiment, the LiB cathode does not comprise a polymeric binder. In this embodiment, carbon nanotubes in the LiB cathode composition act as a binder to hold together the active oxide particles and any other components, such as carbon black. As mentioned above, the polymeric binder does not contribute to the capacity of the LiB cell, and it is advantageous to minimize the amount of the polymeric binder in the cathode composition, or to eliminate it entirely.

In one embodiment, the SWCNT is purified and comprises inorganic impurities ≤ 5%, or ≤ 4.5%, or ≤ 4%, or ≤ 3%, or ≤ 2%, or ≤ 1% by weight. As a comparison, commercial SWCNT typically contain more than 10% (e.g., 10-25%) inorganic impurities by weight including iron (Fe), nickel (Ni), silicon (Si) and/or other metals. These metallic impurities are usually present as residues of the manufacturing process.

In one embodiment, the cathode comprises about 0.5 - 4.5 wt % SWCNT. In another embodiment, the cathode comprises about 1 - 4.5 wt %, or 1.5 - 4.5 wt %, or 2 - 4 wt % SWCNT. For example, the cathode comprises about 1, 2, 3, or 4 wt % SWCNT.

In one embodiment, the cathode comprises SWCNT as the only conductive additive.

In one embodiment, the cathode comprises SWCNT as a conductive additive, and does not comprise a substantial amount of carbon black. For example, the cathode does not comprise more than 0.1% by weight of carbon black or does not comprise any carbon black.

In another embodiment, the cathode further comprises a second conductive additive such as carbon black. Acetylene black, which is a form of carbon black and is highly crystallized, can be used as a second conductive additive.

In one embodiment, the ratio of the two conductive additives SWCNT to carbon black in the cathode may be in the range of 1:3 to 3:1; preferably in the range of 1:2 to 2:1, and more preferably about 1:1.

The amounts of conductive carbon additives in the cathode vary depending on the requirement of the application for which the battery is used. Power cells have higher conductive carbon content (4 - 10% by weight) and lower active material content to achieve lower cell resistance. However, this comes at the price of losing storage capacity. Energy cells have lower conductive carbon content (2 - 4% by weight) and higher active material content to achieve high storage capacity. However, this comes at the price of losing rate capability.

In one embodiment, the combined content of SWCNT and carbon black is between 1% and 8% by weight, preferably between 2% and 6% by weight in the cathode.

In one embodiment, the cell is a power cell, and the combined content of SWCNT and carbon black in the cathode is between 4% and 10% by weight, preferably between 4% and 8% by weight, and more preferably between 4% and 6% by weight.

In one embodiment, the cell is an energy cell, and the combined content of SWCNT and carbon black in the cathode is between 2% and 4% by weight, preferably between 2% and 3% by weight, and more preferably about 2% by weight.

For example, the LiB power cell cathode may contain about 92 wt % NMC, about 2 wt % PVDF, about 3 wt % SWCNT, and about 3 wt % carbon black.

For example, the LiB power cell cathode may contain about 94 wt % NMC, about 2 wt % PVDF, about 2 wt % SWCNT, and about 2 wt % carbon black.

For example, the LiB power cell cathode may contain about 94 wt % NMC, about 2 wt % PVDF, and about 4 wt % SWCNT. In one embodiment, this cathode contains less than 0.1 wt % carbon black. In another embodiment, this cathode does not contain any carbon black.

For example, the LiB energy cell cathode may contain about 96 wt % NMC, about 2 wt % PVDF, and about 2 wt % SWCNT. In one embodiment, this cathode contains less than 0.1 wt % carbon black. In another embodiment, this cathode does not contain any carbon black.

For example, the LiB energy cell cathode may contain about 96 wt % NMC, about 2 wt % PVDF, about 1 wt % SWCNT, and about 1 wt % carbon black.

In one embodiment, the thickness of the cathode is at least 100 µm.

The present invention uses purified SWCNT to either supplement or replace the carbon black material as a conductive additive in the cathode of LiB cells. SWCNT have substantially higher aspect ratio than multi-wall carbon nanotubes (MWCNT) due to their smaller diameter. Consequently, one of the challenges faced with processing high aspect ratio SWCNT into solution is overcoming the substantial van der Waals interaction in order to achieve a stable dispersion of SWCNT. The common approach is to utilize a suitable dispersant or surfactant to minimize agglomeration and re-bundling of the nanotubes after processing in solution. However, the presence of such agents adversely impacts inherent CNT properties such as high electronic conductivity, and adds additional post-processing time and cost for removing the dispersant from the processed CNT.

The present invention describes the processing of high aspect ratio, purified SWCNT into a stable dispersion without the use of a dispersant or surfactant. Aggregates and large bundles of SWCNT are sufficiently reduced in size by high shear processing, such that they remain suspended and dispersed in the carrier solvent over long periods without separating or settling. The mechanically processed SWCNT dispersion is stable in that the dispersed nanotubes are not observed to agglomerate nor show any sedimentation after standing for at least 24 hours, or for at least several weeks at room temperature.

Because neither dispersant nor surfactant are used to prepare the SWCNT dispersion, the cathode material composition of the present invention is completely free of these substances. If present in the cathode material, such substances might detrimentally affect the performance of the cathode in an assembled LiB cell. The elimination of these substances from the SWCNT dispersion process ensures that they are not present in the cathode material, and therefore, do not cause any such performance losses when the cathode material is used in an assembled LiB cell.

The effectiveness of processing SWCNT into stable dispersion by the present invention is manifested in the superior cycling and rate performance of assembled LiB cells with the processed SWCNT as additive to the cathode compared to cells containing MWCNT as an additive.

The SWCNT in the present invention can be metallic SWCNT or semiconducting SWCNT or preferably a mixture of metallic and semiconducting SWCNT. In aggregate, this mixture of high aspect ratio, high purity metallic and semiconducting SWCNT has a relatively high electrical conductivity. Moreover, the SWCNT are purified to the extent that their content of detectable metallic and other impurities is less than 5 wt % and their Raman G/D integrated peak area ratio is at least 20, preferably >30, > 40, > 50, or > 60, as measured using a laser with a wavelength of 532 nm. The purified SWCNT possess a BET specific surface area of between 400 m²/g and about 1300 m²/g, preferably between 800 m²/g and about 1300 m²/g, more preferably between 900 m²/g and about 1300 m²/g, or between 1000 and about 1300 m²/g, or between 1100 and about 1300 m²/g.

The use of high aspect ratio purified SWCNT generally affords a reduction in the total conductive additive content in the cathode to lower overall levels than when using only carbon black, particularly in the case of LiB power cells. This feature allows a higher percentage of active material which results not only in increased capacity but also in better utilization of cell capacity compared to standard LiB cells. This design allows for increased capacity (energy density) at given impedance and power density. On the contrary, in the conventional construction of LiB power cells, capacity (energy density) decreases with increasing ratio of conductive carbon to active material, to obtain the lower impedance and higher power density.

The resulting performance gains achieved with LiB cells of the present invention containing the SWCNT additive are significant with respect to increased capacity, lower impedance, improved capacity retention at high discharge rates, and superior life cycling characteristics compared to the performance of LiB cells with standard carbon black conductive additive. Moreover, these multiple and significant performance enhancements are greatly heightened with the incorporation of purified SWCNT into the LiB electrode. Similar performance gains were not attainable using MWCNT as conductive additive. Commercially available SWCNT can contain between 10 and 25 wt % of inorganic impurities and varying amount of amorphous carbon. Incorporation of as-received SWCNT into the LiB cathode in identical quantity as that of the purified SWCNT yielded LiB cells with attenuated performance enhancement: 4% smaller capacity increase, 10% lower capacity at high discharge rates, and faster capacity fade with cycling (8% capacity fade after 150 cycles vs. 5% for purified SWCNT) compared to LiB cells with the same quantity of purified SWCNT having less than 5 wt % metallic impurities. Incorporation of highly purified SWCNT having less than 1 wt % metallic impurities as a conductive additive in the cathode, at the same quantity as purified SWCNT, provided further enhancement to LiB performance over that achieved with purified SWCNT.

The invention is illustrated further by the following examples that are not to be construed as limiting the invention in scope to the specific procedures or products described therein.

### EXAMPLES

### Example 1. Preparation of SWCNT-NMP dispersion

As-received commercial SWCNT (with ~14 wt %, typically 10-25 wt % inorganic impurities), purified SWCNT (with < 5 wt %, typically 2-4 wt % inorganic impurities), and highly purified SWCNT (with ≤ 1 wt % inorganic impurities) were used to prepare dispersions of SWCNT in N-methyl-2-pyrrolidone (NMP).

Three grams of each SWCNT type were combined with 1 L of NMP and processed by bath sonication with impeller mixing for 1 hour. After this pre-mix treatment, the SWCNT were dispersed by means of a high shear process. The resulting typical viscosity of the SWCNT-NMP dispersion was in the range of 80,000 - 90,000 cP at a shear rate of 0.1 s⁻¹. The resulting three dispersions, each with a different SWCNT type, were stable for at least 24 hours at room temperature without separation or sedimentation.

### Example 2. Incorporation into cathode formulation

### Formulation A: Purified SWCNT only (without carbon black)

In Formulation A, purified SWCNT (< 5 wt % inorganic impurities) was used as the conductive additive to completely replace the traditional carbon black additive, at 2 wt % and 4 wt % for an LiB energy cell and an LiB power cell, respectively. The purified SWCNT-NMP dispersion prepared in Example 1 was incorporated into a cathode formulation mix containing commercial Li metal oxide active material - Ni_{0.33} Mn_{0.33} Co_{0.33}, referred to as NMC111. Also 2 wt % PVDF binder dissolved into NMP solvent was used in the formulation mix. The entire mixture was introduced into a 60 L mixer equipped for both high shear and planetary mixing and processed overnight under vacuum. The viscosity of the resulting processed cathode slurry mixtures with a solids content of 19 wt %, was 26,000 cP as measured using a Brookfield RV instrument, with spindle #4 at 2 rpm.

### Formulation B: Purified SWCNT + carbon black (SP)

In Formulation B, purified SWCNT was used as a conductive additive to partially replace and reduce the amount of traditional carbon black additive. Purified SWCNT (< 5 wt % inorganic impurities) was incorporated in varying amounts: 1 wt % SWCNT + 1 wt % carbon black (Super-P^{®} or "SP", Imerys Graphite & Carbon, Terrebonne, Quebec, Canada) for LiB energy cells, and 2 wt % and 3 wt % SWCNT with 2 wt % and 3 wt % carbon black respectively, for LiB power cells. Thus, in all cases, carbon black was present in the respective formulations but in reduced quantity compared to standard LiB cells typically comprising between about 4 and 10 wt % carbon black for LiB power cells. Also 2 wt % PVDF binder dissolved into NMP solvent was used in the formulation mix.

### Formulation C: As-received SWCNT + carbon black (SP)

In Formulation C, as-received commercial SWCNT (about 14 wt % inorganic impurities) was used as a conductive additive to partially replace and reduce the amount of traditional carbon black additive. As-received commercial SWCNT (about 14 wt % inorganic impurities) was incorporated in the amount of 2 wt % SWCNT + 2 wt % carbon black for LiB power cells. This formulation was otherwise identical to the above Formulation B with 2 wt % purified SWCNT + 2 wt % carbon black, and was prepared in order to compare the effect of SWCNT purity on the performance characteristics of LiB cells. Also 2 wt % PVDF binder dissolved into NMP solvent was used in the formulation mix.

### Formulation D: Standard LiB cells: Carbon black control (SP)

Standard LiB energy cells were formulated to contain 2 wt % carbon black, and standard LiB power cells were formulated to contain 6 wt % carbon black. These served as respective control cells. Also 2 wt % PVDF binder dissolved into NMP solvent was used in the formulation mix.

Table 1 summarizes all the prepared Formulations A through D above, and their compositions.

**Table 1. Cathode Formulations.**

| **Formulation** | **Li active material** | **Purified SWCNT wt %** | **As-received SWCNT wt %** | **Carbon black wt %** | **Binder wt %** | **Active material wt %** | **Power or Energy Cell (P/E)** |
|---|---|---|---|---|---|---|---|
| **A** | NMC 111 | 4 | 0 | 0 | 2 | 94 | P |
| | NMC 111 | 2 | 0 | 0 | 2 | 96 | E |
| **B** | NMC 111 | 3 | 0 | 3 | 2 | 92 | P |
| | NMC 111 | 2 | 0 | 2 | 2 | 94 | P |
| | NMC 111 | 1 | 0 | 1 | 2 | 96 | E |
| **C** | NMC 111 | 0 | 2 | 2 | 2 | 94 | P |
| **D** | NMC 111 | 0 | 0 | 6 | 2 | 92 | P |
| | NMC 111 | 0 | 0 | 2 | 2 | 96 | E |

Table 2 shows the differences in inorganic (metal) impurity content among one batch each of as-received commercial SWCNT, purified SWCNT, and highly purified SWCNT used as conductive additives in the LiB cells.

**Table 2. Comparison of inorganic impurity content between three grades of SWCNT.**

| Impurity | As-received SWCNT (%) | Purified SWCNT (%) | Highly Purified SWCNT (%) | Analysis Method |
|---|---|---|---|---|
| Fe | 10.51 | 1.90 | 0.35 | ICP |
| Ni | 0.043 | 0.009 | 0.009 | ICP-MS |
| Si | 0.020 | 0.010 | 0.010 | ICP-MS |

### Example 3. Coating of cathode formulation onto Al foil

The freshly processed cathode Formulations A through D prepared in Example 2 were coated onto both sides of a roll of battery-grade Al foil (15 µm thick) via slot-die coating using a Dynacoat Lab Coater and dryer (Frontier Industrial Tech Inc.). The wet coating was subsequently dried in an eight-zone convective oven drying chamber of the slot-die coater, with the temperature through the zones ranging from 93.3 to 127°C.

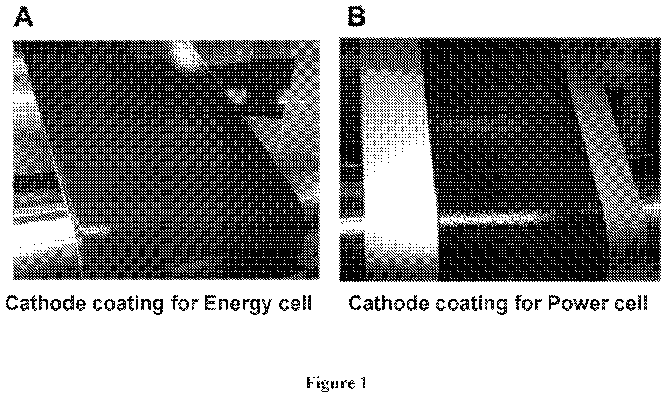

For energy cells, the resulting dry electrode thickness was about 300 µm on average, which decreased to about 170 µm after calendering. The coating weight per side was about 25 mg/cm², corresponding to a density greater than 3 g/cm³. **Figure 1(A)** shows a representative wet cathode coating on Al foil for a LiB energy cell.

For power cells, the resulting dry electrode thickness was about 195 µm, which was reduced to about 98 µm after calendering. The coating weight per side was about 13 mg/cm², corresponding again to a density greater than 3 g/cm³. **Figure 1(B)** shows a representative wet cathode coating for a LiB power cell.

### Example 4. Type 18650 cell assembly

For full cell assembly, the LiB cathodes containing SWCNT additive prepared in Example 3 were slit and each coupled with a standard graphitic intercalation anode composed of BTR 918 graphite powder (BTR New Energy Materials, China), carbon black conductive additive (Super P^{®}), carboxy methylcellulose (CMC) gelling agent and styrene-butadiene rubber (SBR) as binder. This anode formulation was also slot-die coated onto battery grade Cu foil to yield anode electrodes. Each respective cathode was paired with an anode and assembled into type 18650 cells filled with LiPF₆ electrolyte. Using the respective fabricated cathodes from above, type 18650 cells were assembled for operation and testing as full LiB energy cells and LiB power cells.

### Example 5. Performance comparison of purified SWCNT vs. carbon black as conductive additive in LiB energy cells

The coulometric capacity of the LiB is the total Amp-hours available when the battery is discharged at a certain discharge current (specified as a C-rate) from 100 percent state-of-charge to the cut-off voltage. Discharge capacity is calculated by multiplying the discharge current (in Amps) by the discharge time (in hours). In this Example, all LiB cells were discharged from an initial voltage of 4.2 V to a cut-off voltage of 3.0 V.

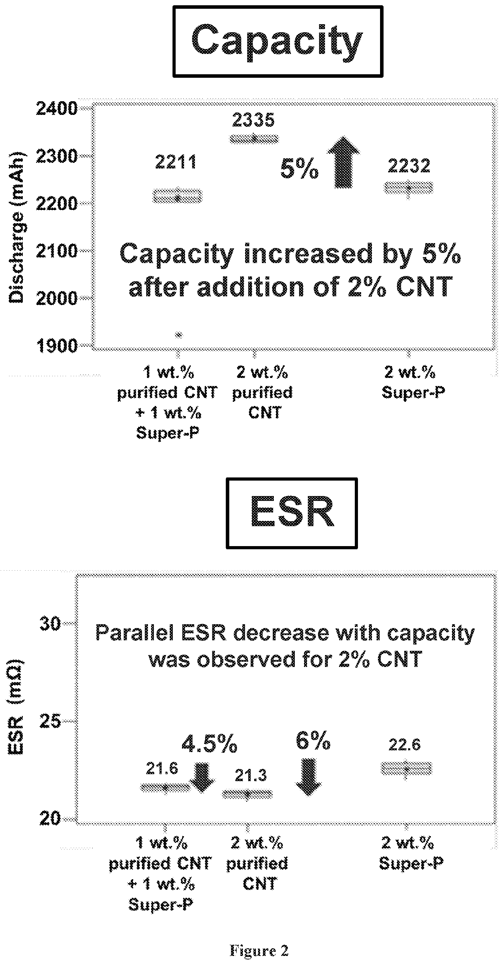

**Figure 2** shows a performance data comparison between standard LiB energy cells containing 96 wt % NMC, 2 wt % binder and 2 wt % carbon black in the cathode versus a LiB energy cell of the present invention with 96 wt % NMC, 2 wt % binder, and 2 wt % SWCNT in the cathode.

By replacing the 2 wt % carbon black additive with 2 wt % SWCNT, there was an observed 5% increase in cell capacity and a parallel 6% reduction in cell ESR.

Electrode formulation changes typically evoke a corresponding change in one performance criteria in LiB cells. The uniqueness in the present case was in achieving simultaneous performance gains of both increased capacity and impedance reduction from the same cathode formulation comprising 2 wt % SWCNT. The inclusion of 1 wt % SWCNT and 1 wt % carbon black resulted in a 4.5% reduction in cell ESR compared to the standard cell with 2 wt % carbon black.

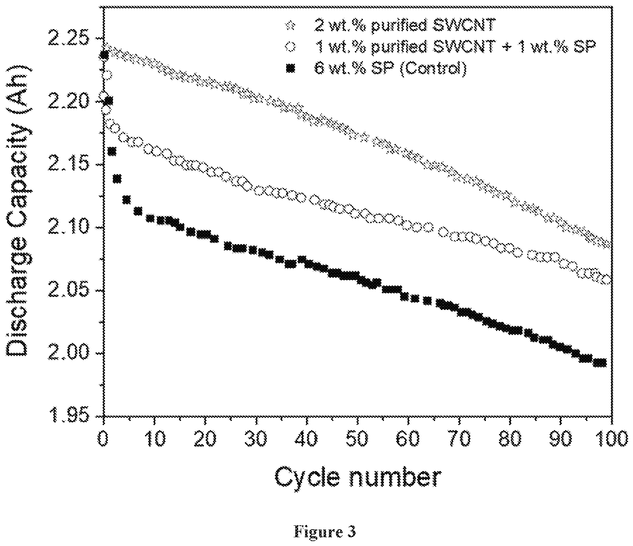

The increase in cell capacity by using 2 wt % purified SWCNT as conductive additive was not only observed initially, but was also sustained upon life cycling, as illustrated in **Figure 3****.** The LiB cell containing 1 wt % SWCNT + 1 wt % carbon black, which showed initial cell discharge capacity similar to that of a standard cell with 2 wt % carbon black, displayed better retention of cell capacity with cycling compared to the standard cell. The cell with 6 wt % carbon black exhibited a steep drop in capacitance within the initial few cycles followed by a more gradual decrease in capacitance. A less steep drop in capacitance within the initial few cycles was observed for the cell with 1 wt% carbon black and 1 wt % SWCNT. On the contrary, no steep drop in capacitance within the initial few cycles was observed in the cell with 2 wt% SWCNT and no carbon black. Instead only a gradual decrease in capacitance was observed.

### Example 6. Performance comparison of purified SWCNT vs. carbon black as conductive additive in LiB power cells

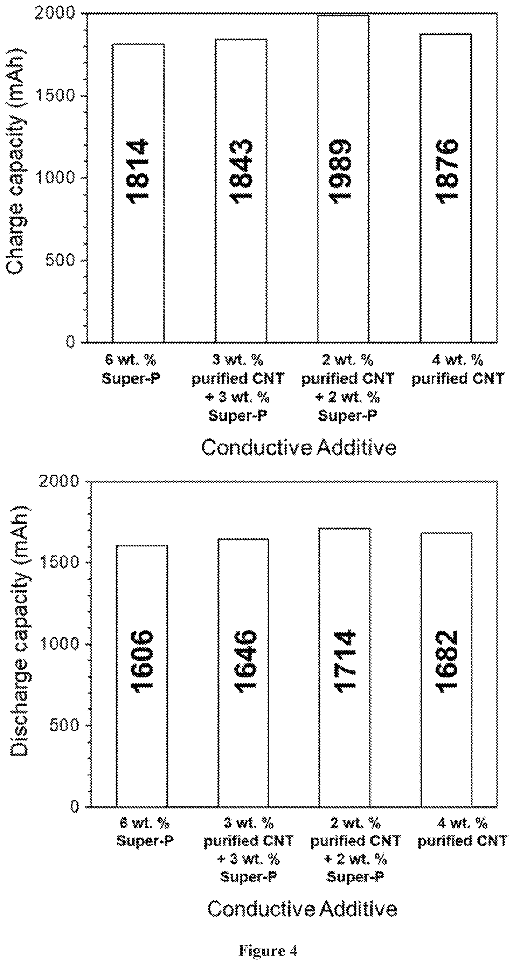

LiB power cells were assembled from cathodes incorporating purified SWCNT as a conductive additive. As shown in **Figure 4****,** the LiB power cells of the present invention, with cathodes containing an optimized amount of 2 wt % purified SWCNT + 2 wt % carbon black, exhibited a charge capacity gain of about 9.6% and a discharge capacity gain of 6.7% over standard LiB power cells with cathodes containing 6 wt % carbon black. Smaller increases in capacity and discharge capacity were also observed for amounts of 3 wt % purified SWCNT + 3 wt % carbon black in the cathode and 4 wt % purified SWCNT without carbon black in the cathode. The results show that the addition of purified SWCNT to the cathode is beneficial, and the total content and the ratio of SWCNT and carbon black may be optimized to achieve maximum gains in both charge capacity and discharge capacity.

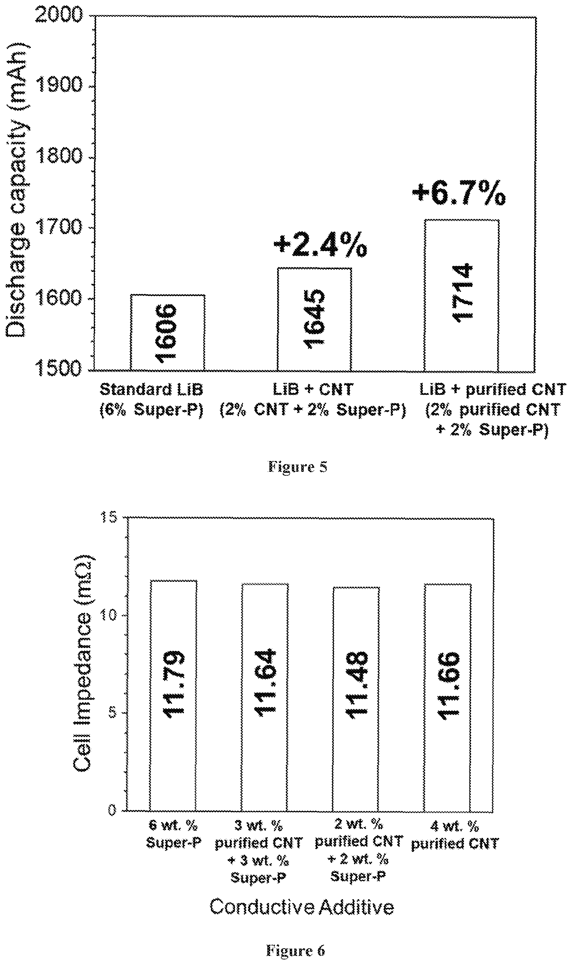

Addition of 2 wt % as-received SWCNT + 2 wt% carbon black to the cathode of LiB power cells also provided a gain in discharge capacity compared to standard LiB cells with only carbon black, as shown in **Figure 5****.** However, the capacity increase was only 2.4% compared to the increase of 6.7% achieved with 2 wt % purified SWCNT + 2 wt % carbon black.

The unique performance characteristic previously observed with LiB energy cells are repeated with LiB power cells, where again the increases in cell capacity were all accompanied by simultaneous decreases in cell ESR. As shown in the impedance plot of **Figure 6****,** the largest reduction in cell impedance of -3% was achieved with the cathode formulation of 2 wt % purified SWCNT and 2 wt % carbon black, which also gave the highest gains in cell capacity. Similarly, cells with cathodes with 3 wt % purified SWCNT and 3 wt % carbon black and 4 wt % purified SWCNT also exhibited lower ESR, but not to the same extent as the cell with 2 wt % purified SWCNT and 2 wt % carbon black.

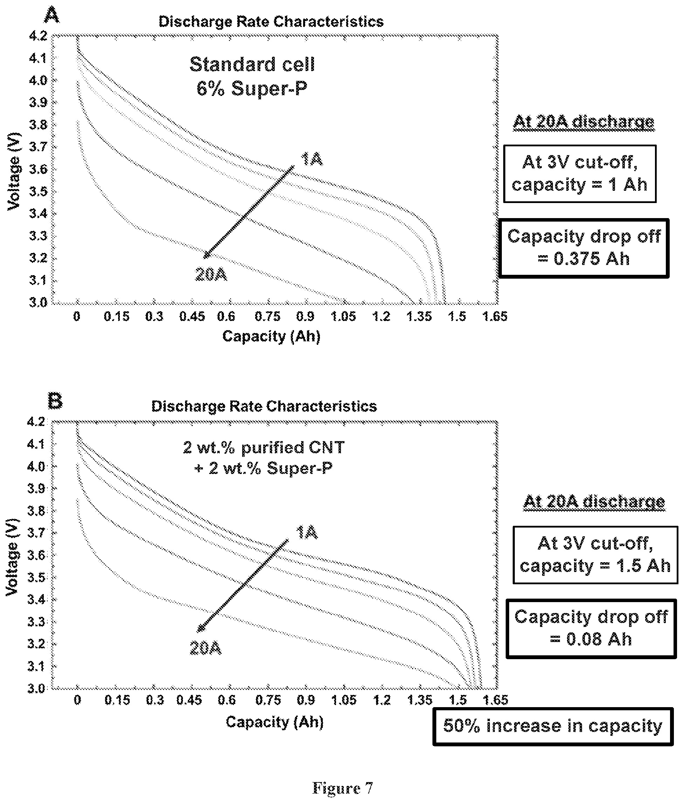

In addition to exhibiting superior capacity and impedance characteristics, the discharge rate performance at increasing high currents of the LiB power cells containing purified SWCNT additive was significantly improved compared to standard cells. **Figure 7** illustrates the advantageous high current discharge performance characteristics of the LiB cell with 2 wt % purified SWCNT + 2 wt % carbon black. These cells show 50% increase in capacity over standard carbon black cells at the high discharge current of 20A with significantly less capacity fade.

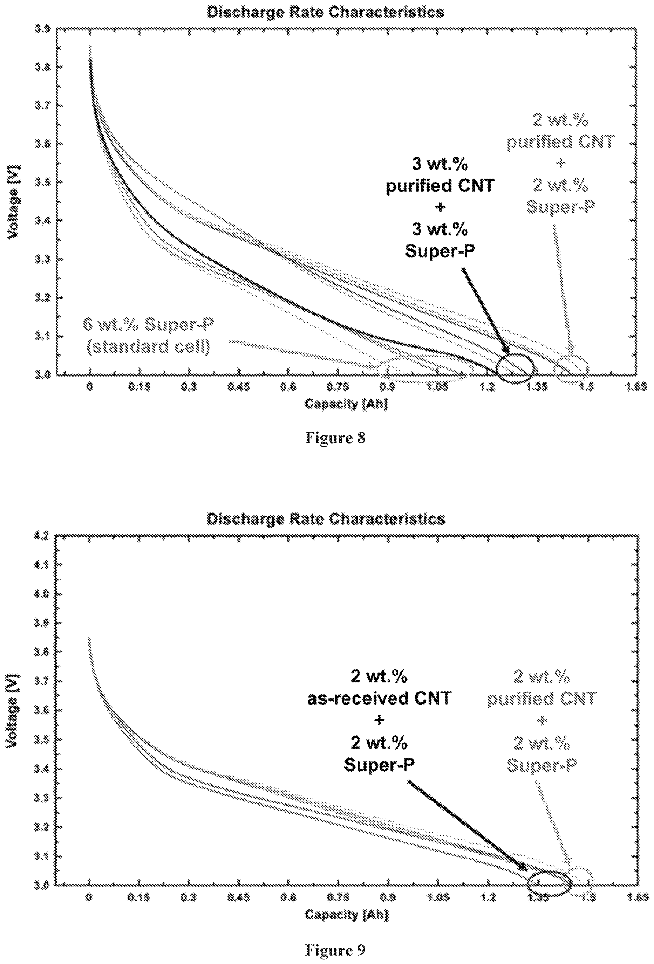

A comparison of discharge curves among LiB power cells at 20A discharge current is shown in **Figure 8****.** The improved high current performance of LiB power cells containing purified SWCNT additive was observed in cells with either 2 wt % purified SWCNT + 2 wt % carbon black or 3 wt % purified SWCNT + 3 wt % carbon black. Specifically, the most improved 20A discharge performance from the LiB power cells was achieved at lower total conductive carbon content (4 wt % *vs.* 6 wt %).

Comparing the 20A discharge rate behavior of LiB cells assembled from the two grades of SWCNT additives (purified and as-received SWCNT) reveals differences in performance, as shown in **Figure 9****.** Power cells incorporating the purified SWCNT as additive (light gray profiles) displayed a high current discharge rate capability superior to that of LiB cells with as-received SWCNT additive (dark profiles).

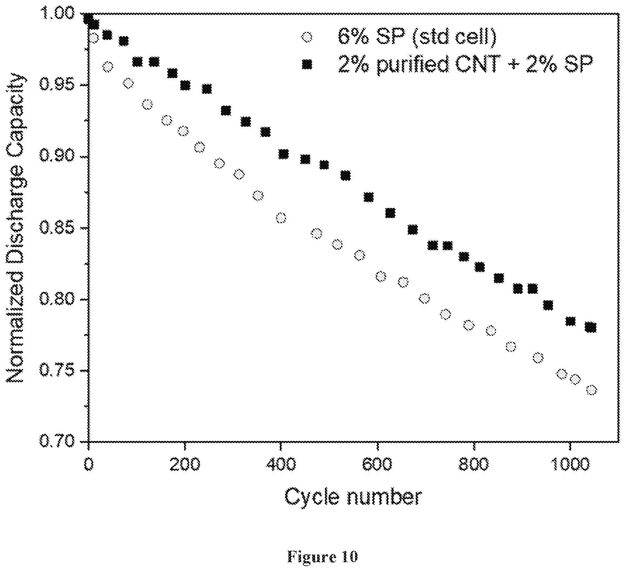

Comparative life cycle data for the LiB power cells are shown in **Figure 10****.** The initial increased capacity of a cell containing 2 wt % purified SWCNT additive + 2 wt% carbon black compared to a standard control cell with 6 wt % carbon black was sustained even after nearing 1,000 cycles at high current.

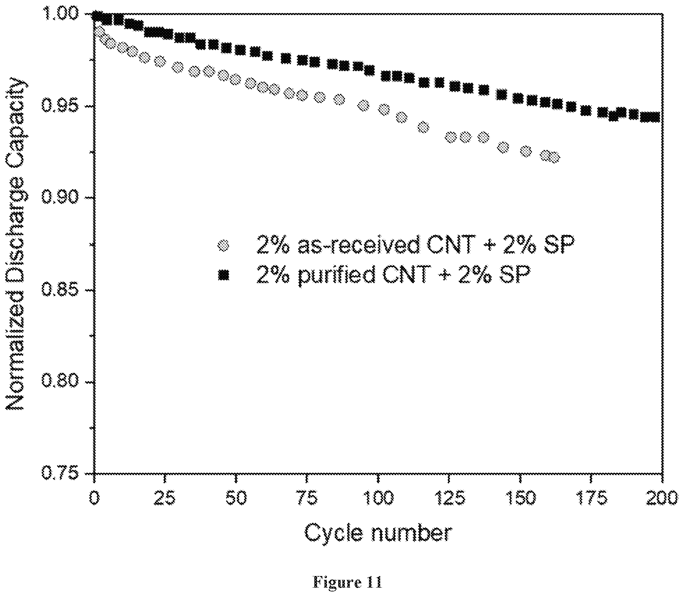

**Figure 11** compares the initial life cycle behavior of LiB cells assembled from the two grades of SWCNT additives. The results show that a power cell incorporating as-received SWCNT as conductive additive (open symbols) had a quicker fade in capacity after a given amount of cycles compared to a cell with purified SWCNT as conductive additive (solid symbols).

### Example 7. Improved performance of LiB energy and power cells as to charge capacity, discharge capacity, and cell impedance upon inclusion of SWCNT as conductive additive

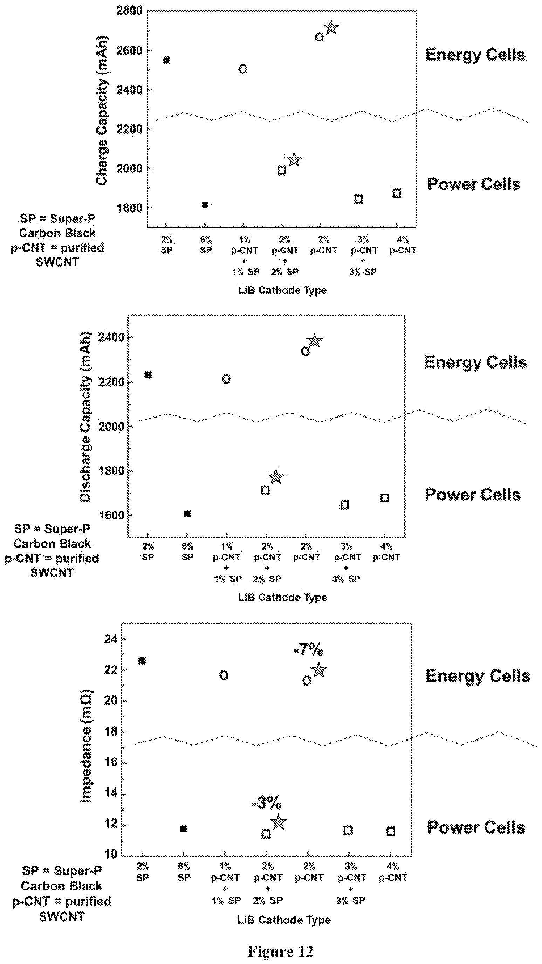

**Figure 12** summarizes the results of Examples 1-6. Within each of the two categories of Power Cells and Energy Cells, the cell that shows the best performance as to Charge Capacity, Discharge Capacity, and Impedance is marked with a star (*) symbol. Addition of purified SWCNT to the cathode formulation of Li ion battery cells in described quantities enables improved performance characteristics of increased cell capacity and simultaneous reduced or similar cell impedance compared to cells using conventional carbon black conductive additive. These significant performance gains are realized at lower overall conductive additive content than is typical for cells with standard carbon black additive, thus allowing increased amount of active material in the electrode formulation with a potential to further increase the LiB cell capacity. The improved performance of the LiB cells with purified SWCNT additive is retained over life cycle testing. Moreover, such significant gains to LiB performance depend on the purity level of SWCNT, as greater purity of the SWCNT additive results in greater performance gains in the LiB cell.

### Example 8. Comparison of specific energy and power densities in LiB power cells

The nominal battery energy per unit mass is referred to as its specific energy, or gravimetric energy density. Specific energy is a characteristic of the LiB chemistry and packaging, and is calculated by dividing the battery energy in Wh (watt-hours) by the mass of the packaged cell in kg. Similarly, specific power, or gravimetric power density, is the maximum available power per unit mass of a battery, and is calculated by dividing the battery power in W (watts) by the mass of the packaged cell in kg.

The performance data summarized in Table 3 quantify the dual gains to specific energy density and specific power density of LiB power cells achieved by incorporating purified SWCNT over standard LiB cells containing only carbon black as conductive additive. The values in the Table are given for comparison of cells with and without SWCNT additive and the absolute value depends on the cell design and active materials used.

**Table 3. Summary of performance data for standard LiB cells compared with cells containing purified SWCNT.**

| **Standard LiB cells (6 wt % carbon black)** | | |
|---|---|---|
| Current (Amps) | Sp. Energy (Wh/kg) | Sp. Power (W/kg) |
| 1 | 126.7 | 87.0 |
| 2 | 122.7 | 173.1 |
| 4 | 118.1 | 344.2 |
| 10 | 107.7 | 846.5 |
| 20 | 81.9 | 1640.2 |

| **4 wt % purified SWCNT LiB cell** | | |
|---|---|---|
| Current (Amps) | Sp. Energy (Wh/kg) | Sp. Power (W/kg) |
| 1 | 137.8 | 89.4 |
| 2 | 132.8 | 178.8 |
| 4 | 125.7 | 355.2 |
| 10 | 113.3 | 872.6 |
| 20 | 99.6 | 1698.9 |

| **2 wt % purified SWCNT +** 2 **wt % SP LiB cell** | | |
|---|---|---|
| Current (Amps) | Sp. Energy (Wh/kg) | Sp. Power (W/kg) |
| 1 | 145.4 | 89.0 |
| 2 | 141.5 | 177.2 |
| 4 | 137.3 | 352.3 |
| 10 | 130.6 | 867.3 |
| 20 | 119.8 | 1689.3 |

| **3 wt % purified SWCNT +** 3 **wt % SP LiB cell** | | |
|---|---|---|
| Current (Amps) | Wh/kg | W/kg |
| 1 | 136.4 | 90.1 |
| 2 | 131.9 | 179.5 |
| 4 | 127.5 | 356.8 |
| 10 | 119.9 | 878.5 |
| 20 | 108.1 | 1712.8 |

As shown in Table 4, increases in cell performance averages were observed in all formulations containing purified SWCNT. Improvements in specific energy ranged between 22 and 46% with maximum increase at 2 wt % SWCNT + 2 wt % carbon black. Improvements in specific power at high C-rate ranged between 3% and 4.4% with maximum increase observed at 3 wt % SWCNT + 3 wt % carbon black.

**Table 4. Gains in specific energy and power with purified SWCNT vs standard LiB cells.**

| **LiB build** | **% gain to sp. energy vs. Std. cell (@ 20A)** | **% gain to sp. power vs. Std. cell (@ 20A)** |
|---|---|---|
| Std. cell (POR) | --- | --- |
| 4 wt % SWCNT | 22 | 3.6 |
| 2:2 (SWCNT:SP) (wt %) | 46 | 3.0 |
| 3:3 (SWCNT:SP) (wt %) | 32 | 4.4 |

### Example 9. Performance comparison of as-received, purified, and highly purified SWCNT as conductive additives in LiB power cells

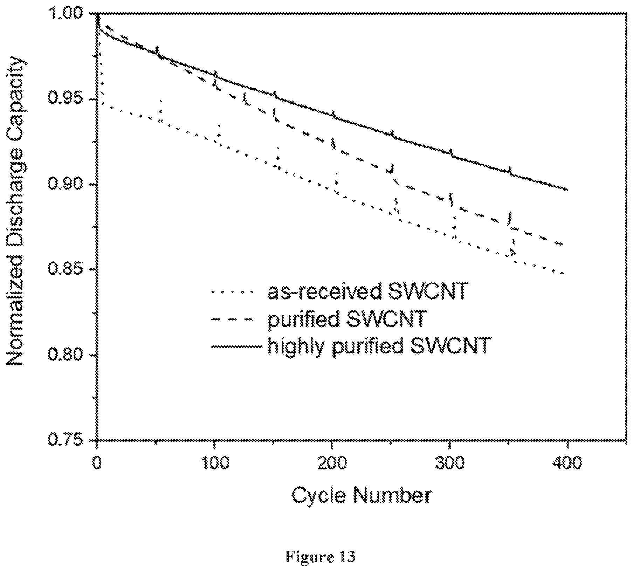

2 wt % SWCNT that is purified to 99 wt % or higher (that is, containing ≤ 1 wt % of inorganic impurity) and referred to as highly purified SWCNT was also used as the conductive additive along with 2 wt % SP in the cathode of LiB power cells. **Figure 13** compares the initial life cycle behavior of LiB power cells with cathodes comprising a highly purified SWCNT grade compared to the other two investigated grades of SWCNT additives, as-received SWCNT and purified SWCNT. The cycling results show that the best performance of the LiB cells was achieved with use of the highly purified SWCNT as additive. After 400 continuous cycles, the LiB cells containing the highly purified SWCNT additive showed close to 90% capacity retention, higher than that achieved with either purified or as-received SWCNT conductive additives.

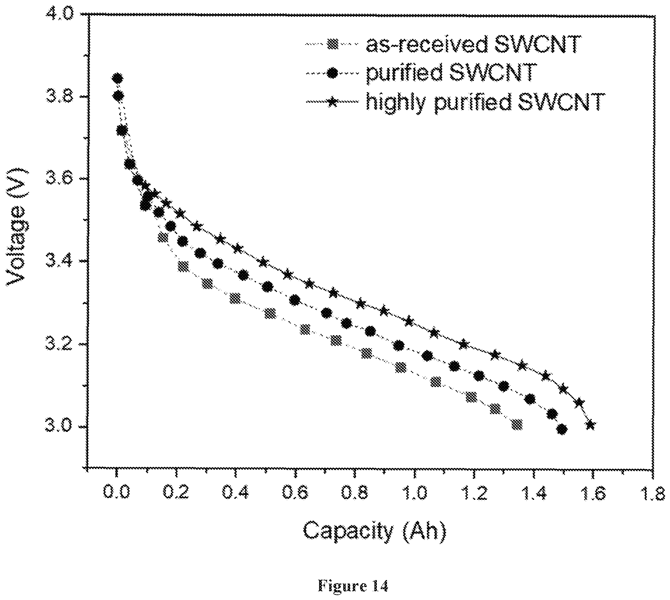

Comparing the 20A discharge rate behavior of LiB cells with cathodes comprising two grades of SWCNT additives with reduced inorganic impurity, i.e. purified and highly purified SWCNT, reveals differences in performance, as shown in **Figure 14****.** The high rate performance results mirror the cycling performance, showing that LiB power cells incorporating the highly purified SWCNT as additive displayed the highest current discharge rate capability, superior even to that of similar LiB power cells with purified SWCNT as additive.

### Example 10. Performance comparison of MWCNT vs. SWCNT as conductive additive in LiB power cells

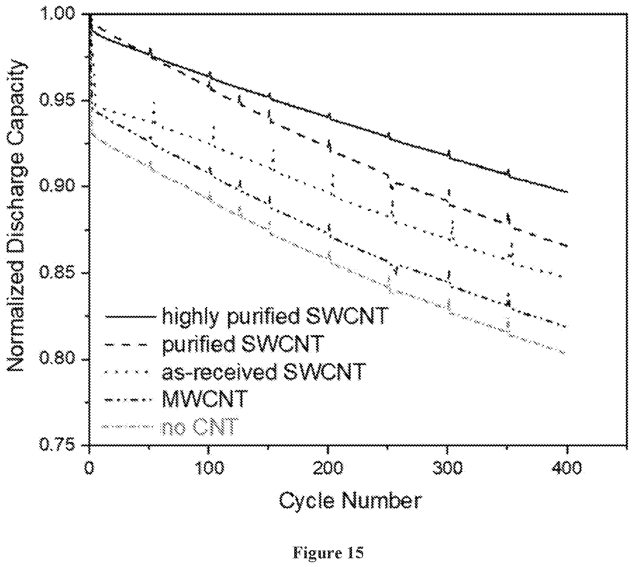

The use of 2 wt % MWCNT as the conductive additive along with 2 wt % SP in the cathode of LiB power cells was investigated to compare the effectiveness of different CNT types as conductive additive. **Figure 15** compares the initial life cycle behavior of LiB cells assembled from MWCNT additive compared to individual cells containing the three grades of SWCNT additives, as-received SWCNT, purified SWCNT, and highly purified SWCNT. The results show that LiB power cells incorporating as-received MWCNT as additive (dashed and dotted line) had the quickest fade in capacity after initial cycling, with retention of < 85% capacity after 400 cycles, compared to cells with three different grades of SWCNT as additive which all exhibited superior cycling performance compared to the cells containing MWCNT.

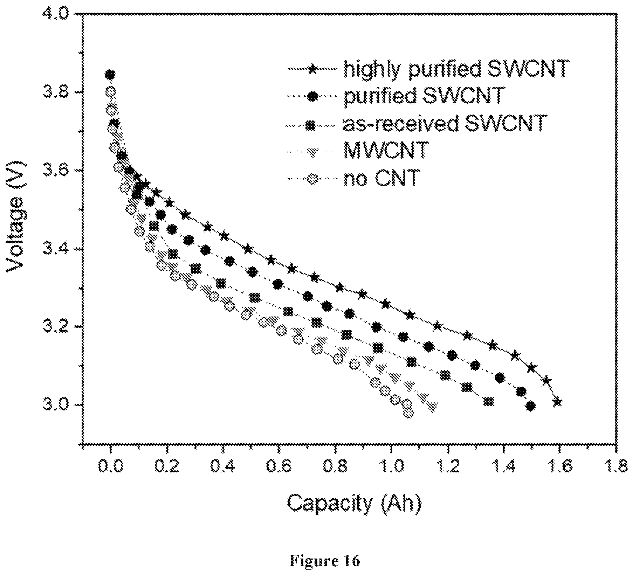

**Figure 16** compares the 20A discharge rate behavior of LiB power cells with cathodes comprising MWCNT additive to corresponding high current discharge curves from cells comprising various grades of SWCNT as additive. Power cells incorporating MWCNT as additive displayed lowest high current discharge rate capability and inferior to similar LiB cells containing all grades of SWCNT additive.

## Claims

1. A lithium ion battery cell having a cathode comprising an active material and 1-5% by weight of single wall carbon nanotubes (SWCNT) as a conductive additive, wherein the active material is an Li metal oxide or Li iron phosphate, and the SWCNT has an inorganic impurity content of less than 5% by weight.

2. The cell according to Claim 1, wherein the active material is selected from the group consisting of: Li-NiMnCo-Oxide (NMC), Li-NiCoAl-Oxide (NCA), Li-Fe-Phosphate (LFP), Li-Cobalt-Oxide (LCO), Li-Manganese-Oxide (LMO), and any combination thereof.

3. The cell according to Claim 1, wherein the SWCNT has an inorganic impurity content of less than 3% by weight.

4. The cell according to Claim 1, wherein the cathode further comprises carbon black as a second conductive additive.

5. The cell according to Claim 4, wherein the combined content of SWCNT and carbon black in the cathode is between 1% and 8% by weight, optionally wherein the SWCNT to carbon black ratio is about 1:1.

6. The cell according to Claim 4, wherein the SWCNT is about 2% by weight and carbon black is about 2% by weight in the cathode.

7. The cell according to Claim 1, wherein the cell is a power cell and the combined content of SWCNT and carbon black in the cathode is between 4% and 10% by weight, preferably wherein the amount of SWCNT is between 2 and 3% by weight and the amount of carbon black is between 2 and 3% by weight.

8. The cell according to Claim 7, wherein the amount of SWCNT is about 4% by weight.

9. The cell according to Claim 8, wherein the amount of carbon black in the cathode is less than 0.1% by weight.

10. The cell according to Claim 7, having an anode comprising graphite powder, carbon black as a conductive additive, a gelling agent, and a binder, and having LiPF₆ as an electrolyte.

11. The cell according to Claim 1, wherein the cell is an energy cell and the combined content of SWCNT and carbon black in the cathode is between 2% and 4% by weight, or the amount of SWCNT in the cathode is between 1 and 2% by weight, and the total amount of SWCNT and carbon black in the cathode is about 2% by weight, or the amount of carbon black in the cathode is less than 0.1 % by weight.

12. The cell according to Claim 11, having an anode comprising graphite powder, carbon black as a conductive additive, a gelling agent, and a binder, and having LiPF₆ as an electrolyte.

13. The cell according to Claim 1, wherein the cathode does not comprise a polymeric binder.

14. The cell according to Claim 1, wherein the SWCNT has a BET specific surface area of between 800 m²/g and about 1300 m²/g.

15. The cell according to Claim 1, wherein the SWCNT has a Raman G/D integrated peak area ratio of at least 20 as measured using a laser having a wavelength of 532 nm.

## Patentansprüche

1. Lithium-lonen-Batteriezelle mit einer Kathode, die ein Aktivmaterial und 1-5 Gewichtsprozent (Gew.-%) einwandige Kohlenstoffnanoröhrchen (SWCNT) als Leitzusatz umfasst, wobei das Aktivmaterial ein Li-Metalloxid oder Li-Eisenphosphat ist, und das SWCNT einen Gehalt an anorganischen Verunreinigungen von weniger als 5 Gew.-% aufweist.

2. Zelle nach Anspruch 1, wobei das Aktivmaterial aus der Gruppe ausgewählt ist, die aus: Li-NiMnCo-Oxid (NMC), Li-NiCoAl-Oxid (NCA), Li-Fe-Phosphat (LFP), Li-Cobaltoxid (LCO), Li-Manganoxid (LMO) und aus jeder Kombination davon besteht.

3. Zelle nach Anspruch 1, wobei das SWCNT einen Gehalt an anorganischen Verunreinigungen von weniger als 3 Gew.-% aufweist.

4. Zelle nach Anspruch 1, wobei die Kathode ferner Ruß als zweiten Leitzusatz umfasst.

5. Zelle nach Anspruch 4, wobei der kombinierte Gehalt an SWCNT und Ruß in der Kathode bei zwischen 1 und 8 Gew.-% liegt, wobei das Verhältnis von SWCNT zu Ruß wahlweise ungefähr 1:1 beträgt.

6. Zelle nach Anspruch 4, wobei das SWCNT ungefähr 2 Gew.-% und der Ruß ungefähr 2 Gew.-% in der Kathode ausmachen.

7. Zelle nach Anspruch 1, wobei die Zelle eine Leistungszelle ist und der kombinierte Gehalt an SWCNT und Ruß in der Kathode bei zwischen 4 und 10 Gew.-% liegt, vorzugsweise wobei die Menge an SWCNT bei zwischen 2 und 3 Gew.-% liegt und die Menge an Ruß bei zwischen 2 und 3 Gew.-% liegt.

8. Zelle nach Anspruch 7, wobei die Menge an SWCNT ungefähr 4 Gew.-% beträgt.

9. Zelle nach Anspruch 8, wobei die Menge an Ruß in der Kathode weniger als 0,1 Gew.-% beträgt.

10. Zelle nach Anspruch 7 mit einer Anode, die Graphitpulver, Ruß als Leitzusatz, ein Geliermittel und ein Bindemittel umfasst, und LiPF₆ als Elektrolyt aufweist.

11. Zelle nach Anspruch 1, wobei die Zelle eine Energiezelle ist und der kombinierte Gehalt an SWCNT und Ruß in der Kathode bei zwischen 2 und 4 Gew.-% liegt, oder die Menge an SWCNT in der Kathode bei zwischen 1 und 2 Gew.-% liegt und die Gesamtmenge an SWCNT und Ruß in der Kathode ungefähr 2 Gew.- % beträgt, oder die Menge an Ruß in der Kathode weniger als 0,1 Gew.-% beträgt.

12. Zelle nach Anspruch 11 mit einer Anode, die Graphitpulver, Ruß als Leitzusatz, ein Geliermittel und ein Bindemittel umfasst, und LiPF₆ als Elektrolyt aufweist.

13. Zelle nach Anspruch 1, wobei die Kathode kein polymeres Bindemittel umfasst.

14. Zelle nach Anspruch 1, wobei das SWCNT eine BET-spezifische Oberfläche von zwischen 800 m²/g und etwa 1300 m²/g aufweist.

15. Zelle nach Anspruch 1, wobei das SWCNT ein Raman-GID-integriertes Peakflächenverhältnis von mindestens 20 aufweist, gemessen mit einem Laser mit einer Wellenlänge von 532 nm.

## Revendications

1. Cellule de batterie lithium-ion ayant une cathode comprenant un matériau actif et 1 à 5 % en poids de nanotubes de carbone monofeuillets (SWCNT) en guise d'additif conducteur, dans laquelle le matériau actif est un oxyde de Li-métal ou un phosphate de Li-fer, et le SWCNT a une teneur en impuretés inorganiques inférieure à 5 % en poids.

2. Cellule selon la revendication 1, dans laquelle le matériau actif est choisi dans le groupe constitué par : oxyde de Li-NiMnCo (NMC), oxyde de Li-NiCoAl (NCA), phosphate de Li-Fe (LFP), oxyde de Li-Cobalt (LCO), oxyde de Li-manganèse (LMO), et n'importe quelle combinaison de ceux-ci.

3. Cellule selon la revendication 1, dans laquelle le SWCNT a une teneur en impuretés inorganiques inférieure à 3 % en poids.

4. Cellule selon la revendication 1, dans laquelle la cathode comprend en outre du noir de carbone en guise de second additif conducteur.

5. Cellule selon la revendication 4, dans laquelle la teneur combinée en SWCNT et en noir de carbone dans la cathode est comprise entre 1 % et 8 % en poids, facultativement dans laquelle le rapport du SWCNT au noir de carbone est d'environ 1:1.

6. Cellule selon la revendication 4, dans laquelle le SWCNT représente environ 2 % en poids et le noir de carbone représente environ 2 % en poids dans la cathode.

7. Cellule selon la revendication 1, dans laquelle la cellule est une cellule de puissance et la teneur combinée en SWCNT et en noir de carbone dans la cathode est comprise entre 4 % et 10 % en poids, de préférence dans laquelle la quantité de SWCNT est comprise entre 2 et 3 % en poids et la quantité de noir de carbone est comprise entre 2 et 3 % en poids.

8. Cellule selon la revendication 7, dans laquelle la quantité de SWCNT est d'environ 4 % en poids.

9. Cellule selon la revendication 8, dans laquelle la quantité de noir de carbone dans la cathode est inférieure à 0,1 % en poids.

10. Cellule selon la revendication 7, ayant une anode comprenant de la poudre de graphite, du noir de carbone en guise d'additif conducteur, un agent gélifiant et un liant, et ayant du LiPF₆ en guise d'électrolyte.

11. Cellule selon la revendication 1, dans laquelle la cellule est une cellule d'énergie et la teneur combinée en SWCNT et en noir de carbone dans la cathode est comprise entre 2 % et 4 % en poids, ou la quantité de SWCNT dans la cathode est comprise entre 1 et 2 % en poids, et la quantité totale de SWCNT et de noir de carbone dans la cathode est d'environ 2 % en poids, ou la quantité de noir de carbone dans la cathode est inférieure à 0,1 % en poids.

12. Cellule selon la revendication 11, ayant une anode comprenant de la poudre de graphite, du noir de carbone en guise d'additif conducteur, un agent gélifiant et un liant, et ayant du LiPF₆ en guise d'électrolyte.

13. Cellule selon la revendication 1, dans laquelle la cathode ne comprend pas de liant polymère.

14. Cellule selon la revendication 1, dans laquelle le SWCNT a une surface spécifique BET comprise entre 800 m²/g et environ 1300 m²/g.

15. Cellule selon la revendication 1, dans laquelle le SWCNT a un rapport d'aire de pic intégrée Raman G/D d'au moins 20 tel que mesuré à l'aide d'un laser ayant une longueur d'onde de 532 nm.
